# EUROPEAN PATENT APPLICATION

(11) **EP 2 869 627 A1**
(43) Date of publication of application: **06.05.2015**
(21) Application number: 13191667.8
(22) Date of filing: 05.11.2013
(51) Int. Cl.: H04W 28/06

(54) **Method and apparatus for communication in a wireless network**

(71) Applicant: The University of Kent, Canterbury Kent CT2 7NT (GB)
(72) Inventor: Haci, Hüseyin, Canterbury, Kent CT2 7 NT (GB); Osman, Hassan, Canterbury, Kent CT2 7NT (GB); Zhu, Huiling, Canterbury, Kent CT2 7NT (GB); Esteves Carvalho Sofia, Helena Rute, 1990-002 Lisboa (PT); Amaral Lopes, Luis, 2725-217 Mem Martins (PT)
(74) Representative: Betten & Resch

(57) **Abstract**

Method for transmitting data from a controller to multiple stations in a wireless network, wherein said data comprises a first data set to be sent to a first station and a second data set to be sent to a second station, whereby the method comprises the following steps:
generating a MAC frame comprising a MAC header and a payload, said payload comprising one or more packets, each packet being generated such that it comprises:
a first control bits field including an identification (ID) of the first station, and
data bits from the first data set;
a second control bits field including an identification (ID) of the second
station, and data bits from the second data set;

transmitting said generated MAC frame by said controller.

## Description

### FIELD OF INVENTION

The present invention relates to a method and an apparatus for transmitting data from a controller to multiple stations in a wireless network as well as a method and an apparatus for receiving data from a controller at multiple stations in a wireless network

### BACKGROUND OF THE INVENTION

The Internet backbone is currently extended by means of low-cost wireless technologies that embody a multi-operator model, i.e., a local-loop based upon what a specific community of individuals (end-users) is willing to share networking resources. In these environments, communication is performed as defined in IEEE 802.11 standards, via a broadcast. As such, when one device (a station) triggers communication, it prevents the others of communicating during a specific time-frame - contention is the process applied to deal with collisions within the context of the shared medium.

In environments where users roam frequently, and where some devices are not uniquely controlled by operators, communication will become harder to be addressed, as at an instant in time, a device serving a specific station may disappear thus endangering the communication towards others as well as the established communication. This is a problem that is not trivial to deal with, as it implies, at a first glance, to require changes not only in terms of lower networking layers (OSI Layer 1 and the lower part of Layer 2) but possibly changes in hardware.

Within the context of wireless networks, there are several radio transmission techniques being applied. For instance, 802.11b uses a direct sequence spread spectrum technique called complementary coded keying (CCK). The bit stream is processed with a special coding and then modulated using Quadrature Phase Shift Keying (QPSK). 802.11 a/g consider a 52-channel orthogonal frequency division multiplexing (OFDM). Out of the 52 OFDM sub-carriers, 48 are for data and 4 are "pilot subcarriers". In terms of non-overlapping channels, a 2.4 GHz wireless network, assuming a 20MHz channel width, can be split into 4 different non-overlapping channels. Then, countries apply specific regulations to define how much power, and which channels are allowed.

Due to these constrains, and to the way OFDM works, when a device grabs the medium, it will only stop once transmission has ended, independently of the signal conditions, and independently on whether or not surrounding stations are closer to the antenna (have a better signal), or on the amount of data to transmit. Therefore, even though there are theoretically 48 sub-frequencies to carry data, currently, those carriers can only be applied at a time between a station, and an antenna. From an OSI Layer 1 perspective, data is assigned to specific OFDM symbols. Between a transmitter and a receiver, only one symbol can be transported per unit of time.

The concept of simultaneous transmission over OFDM is called orthogonal frequency division multiple access (OFDMA). OFDMA is currently employed at high-data rate communication systems such as, WiMAX or Long Term Evolution (LTE), LTE-advanced. However, these wireless broadband systems use hardware components (multiplexer, demultiplexer, etc.) which are specialized to enable OFDMA communications.

### SUMMARY OF THE INVENTION

The present invention is defined in the independent claims. The dependent claims define embodiments of the invention.

According to one embodiment there is provided a method for transmitting data from a controller to multiple stations in a wireless network, wherein said data comprises a first data set to be sent to a first station and a second data set to be sent to a second station, whereby the method comprises the following steps:
generating a MAC frame comprising a MAC header and a payload, said payload comprising one or more packets, each packet being generated such that it comprises:
   a first control bits field including an identification (ID) of the first station, and data bits from the first data set;
   a second control bits field including an identification (ID) of the second station, and data bits from the second data set;
transmitting said generated MAC frame by said controller.

Thereby, a mechanism for downlink transmission is provided (from antenna/controller to station) to assist in coding a single packet comprising data to be transmitted to multiple stations. Such mechanism results in a more efficient splitting of transmission time thus allowing to serve more stations in a specific time-frame. Thus, simultaneous transmission without any hardware change is achieved.

According to one embodiment said first control bits field includes an indication of a first length of data bits from the first data set; and said second control bits field includes an indication of a second length of data bits from the second data set.

This is an advantageous possibilities to indicate to the first and second stations how many data bits of have to be counted until the next control bits field is present in the payload section of the received MAC frame. In other words, the second station has to count the data bits for the first station according to the data length parameter in the first control bits field in order to identify the second control bits field indicating the relevant data for the second station. In contrast, if lengths of data bits are not provided at all, a default length of data bits in a packet may be determined in advance for all stations.

According to one embodiment multiple packets are generated when generating said MAC frame, wherein said first data set and said second data set are used to fill the first and second data lengths of each packet in an intercalating fashion when generating said MAC frame.

This is a suitable way of arranging bits from multiple streams to be communicated over a single transmitter. The embodiments of the present invention may for example work on a single channel which complies with currently used devices or on a plurality of different channels. In general, the present invention can be used with n stations towards x controllers, virtual or not, via up to n different channels.

According to one embodiment the first and second lengths are assigned in accordance of the priority of said first and said second station.

Thereby, the stations are served by their controller according to their priority in the system - the highest priority stations may get served first and/or may get a greater amount of resources than other low priority stations. Thus, in a packet, the length of data bits for a high priority station is larger than the length of data bits for a low priority station and the data bits for the high priority station are arranged before the data bits of the low priority station.

According to one embodiment the first control bits field further comprises a first End-of-Data (EOD) flag, which indicates to the first station whether data from the first data set is still to be received, and a second End-of-Data (EOD) flag, which indicates to the second station whether data from the second data set is still to be received.

This is a suitable way of enabling a station to decide, when the station finds the control bits with its own ID, if this is the last piece of data or not. If this is not the last piece of data, it continues reading its control bits and data until finding the EOD flag set or by reaching the end to the payload.

According to one embodiment each of said packets corresponds to a symbol to be transmitted, preferably in an OFDM transmission.

This is a suitable way to implement the present invention in known wireless transmission protocols and/or standards, which are based on symbol transmission.

According to one embodiment the method further comprises before the step of generating a MAC frame:
arranging the data set of a respective station in a virtual queue according to a MAC layer virtualization protocol,
associating the ID of the respective station to said virtual queue, and generating a temporary MAC frame comprising a MAC header, the respective control bits fields and the respective data sets from the respective virtual queues, whereby the MAC frame is generated from the temporary MAC frame.

This an efficient way for distributing resources: Each time a new station requests resources from a controller, it is assigned with a specific virtual queue (possibly based on MAC Layer virtualization techniques available today) which gets associated to the identifier of the station that is transmitted with the data frames of the station. The temporary MAC frame is an internal frame, created to not increase the complexity of the embodiment. The temporary frame is not transmitted to the stations. The temporary MAC frame joins all the payloads that will be transmitted by the MAC frame. This temporary MAC frame may be computed by the IEEE80211 standards before the MAC frame creation.

According to one embodiment the method further comprises using an OFDM transmitter in the step of generating a MAC frame, wherein a packet corresponding to an symbol is generated by a Serial-to-Parallel module, a QAM mapping module and an inverse fast fourier transform (IFFT) module having N inputs and a modulation level of M bits per sample such that the symbol comprises N*M bits.

This is a suitable way for intercalating bits of a multitude of data sets in an OFDM symbol.

According to a one embodiment, if the bit length of a respective data set of a station is higher than the maximum bit lengths available for said station in the payload of a MAC frame, a further MAC frame is created by using fragmentation.

Thus, several MAC frames may be created in order transmit the whole data set in a virtual queue for a station.

According to one embodiment there is provided a method for receiving data from a controller at multiple stations in a wireless network, wherein said data comprises a first data set to be sent to a first station and a second data set to be sent to a second station, whereby the method comprises the following steps:
receiving a MAC frame comprising a MAC header and a payload at the first station and at the second station, said payload comprising one or more packets,
each packet being generated such that it comprises:
   a first control bits field including an identification (ID) of the first station, and data bits from the first data set;
   a second control bits field including an identification (ID) of the second station, and data bits from the second data set;
reading of the control bits fields by the first station and the second station;
if the first station identifies its own ID in the first control bits field, reading of the data bits from the first data set by the first station; and
if the second station identifies its own ID in the second control bits field, reading of the data bits from the second data set by the second station.

Thereby, a mechanism for downlink reception is provided (from antenna/controller to station) to assist in decoding a single packet comprising data to be transmitted to multiple stations. Reception of such a packet allows a more efficient splitting of transmission time thus allowing to serve more stations in a specific time-frame. Thus, reception of such a packet achieves simultaneous reception of data for a multitude of stations without any hardware change.

According to one embodiment the method for receiving data from a controller at multiple stations in a wireless network comprises receiving a MAC frame generated by an embodiment of the method for transmitting data from a controller to multiple stations in a wireless network.

According to one embodiment a station continues reading further control bits fields and the respective data bits until the respective EOD flag in its control bits fields indicates the end of data to be read for said station

This is a suitable way of enabling a station to decide, when the station finds the control bits with its own ID, if this is the last piece of data or not. If this is not the last piece of data, it continues reading its control bits and data until finding the EOD flag set or by reaching the end to the payload.

According to one embodiment the method for receiving data from a controller at multiple stations in a wireless network comprises joining the read data bits to a MAC frame by said station.

Thereby, the data for said station can be further processed according to known processing standards/protocols by said station.

According to one embodiment said data comprises n data sets to be respectively sent to n stations and a packet comprises n control bits field and respective data bits for the n stations from said n data sets if n stations (n≥2) are to be served in the wireless network.

This a suitable way for simultaneously transmitting and/or receiving n data sets for n stations, respectively. Thereby, it is preferable that each of the n control bits fields comprises an indication of the length of the corresponding data bits for the n stations such that a packet comprises n indications of n data lengths. Thereby, it is preferable that the n data sets are used to fill the n data lengths of each packet in an intercalating fashion when generating said MAC frame. Thereby, it is preferable that the n data lengths are assigned in accordance of the priority of said n stations. Thereby, it is preferable that each of the n control bits field further comprises a End-of-Data (EOD) flag, which indicates to the respective station whether data from its data set is still to be received. Thus, a packet comprises n End-of-Data (EOD) flags.

According to one embodiment the method further comprises generating, transmitting and/or receiving a packet comprising the data bits for a single station and the respective control bits field.

This is a suitable way for transmitting remaining data bits for a single station, if the other stations have been served completely such that no data remains to be transmitted to these stations.

According to one embodiment there is provided a controller comprising modules for carrying out a method according to one of the embodiments of the present invention.

According to one embodiment there is provided a station comprising modules for carrying out a method according to one of the embodiments of the present invention.

According to one embodiment there is provided a computer program comprising computer program code which when being executed on a computer enables said computer to carry out a method according to one of the embodiments of the invention.

### BRIEF DESCRIPTION OF THE DRAWINGS

Fig. 1 schematically illustrates a high level implementation view according to an embodiment of the invention.
Fig. 2 schematically illustrates a block diagram for an OFDM based transmitter and receiver.
Fig. 3 schematically illustrates an implementation of features and the adaptation from the original MAC Layer according to an embodiment of the invention.
Fig. 4 schematically illustrates Temporary MAC frame and Control bit field example according to an embodiment of the invention.
Fig. 5 schematically illustrates generating on a controller a MAC frame comprising a MAC header and a payload according to an embodiment of the invention.
Fig. 6 schematically illustrates generating a fragment of the original frame based on the MAC frame according to an embodiment of the invention.
Fig. 7 schematically illustrates a flowchart of the transmission side at the controller according to an embodiment of the invention.
Fig. 8 schematically illustrates a flowchart of the receiver side at the station according to an embodiment of the invention.

### DETAILED DESCRIPTION

At first some abbreviations which are used in the following will be explained:
Subscriber station, station, user equipment, subscriber unit: a device that communicates via a specific channel, controlled and served by another device (controller).
Controller, antenna: the device that takes care of controlling the communication between multiple subscribers units and which e.g. in Wi-Fi is known as Access Point, as antenna or controller.
Uplink, upstream: data transmission performed from subscriber stations to controller.
Downlink, downstream: data transmission performed from controller to subscriber stations.

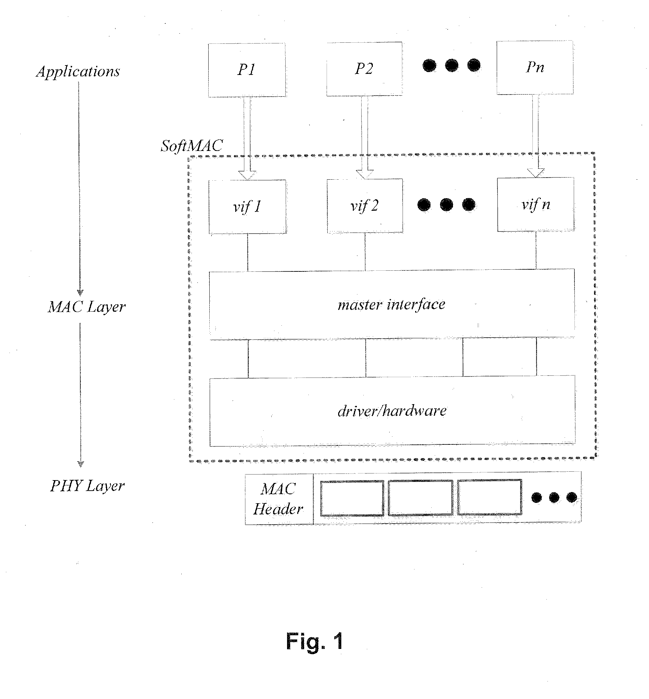

Fig. 1 shows a high level implementation view according to an embodiment of the invention. The system may for example be based on a regular, existing Wi-Fi (e.g. 802.11 a or g) network, where one controller is expected to serve multiple stations.

Information from multiple stations here defined as s1, ..., sn, arrive sequentially to the controller. Each time a new station requests resources from a controller, it is assigned with a specific virtual queue (based on MAC layer virtualization techniques available today) which gets associated to the identifier of the station that is transmitted with the data frames of the station.

The stations may then be served by their controller according to their priority in the system- the highest priority stations get served first and may get greater amount of resources than other low priority stations.

Once the controller has data to be sent to these stations that data is kept on the mentioned queues. For the sake of illustration it is referred to it as P1, ..., Pn. The controller then periodically serves the queues and builds the transmission container used today in wireless networks, namely, a MAC frame according to an embodiment of the invention. This MAC frame, however, contains information to be sent to multiple stations s1, ..., sn of the n stations to be served and it is here described by the term Superframe.

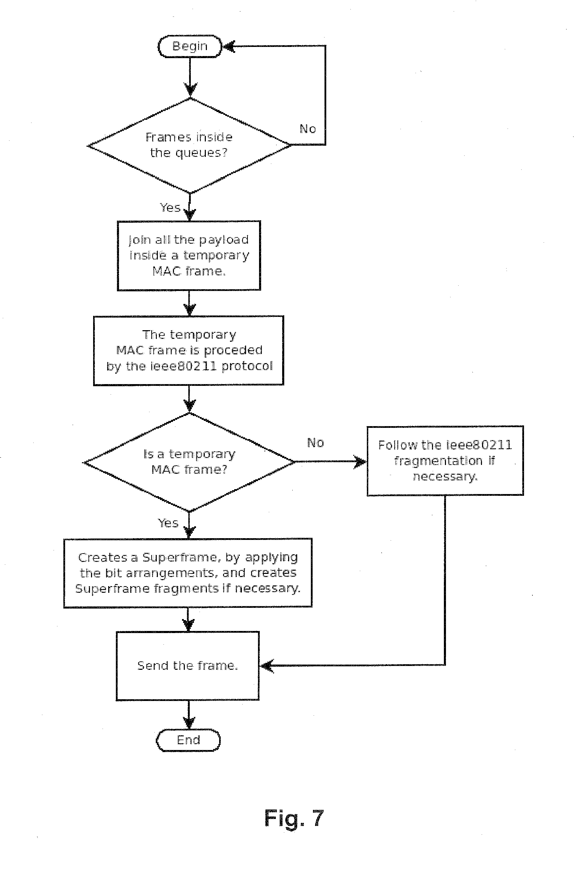

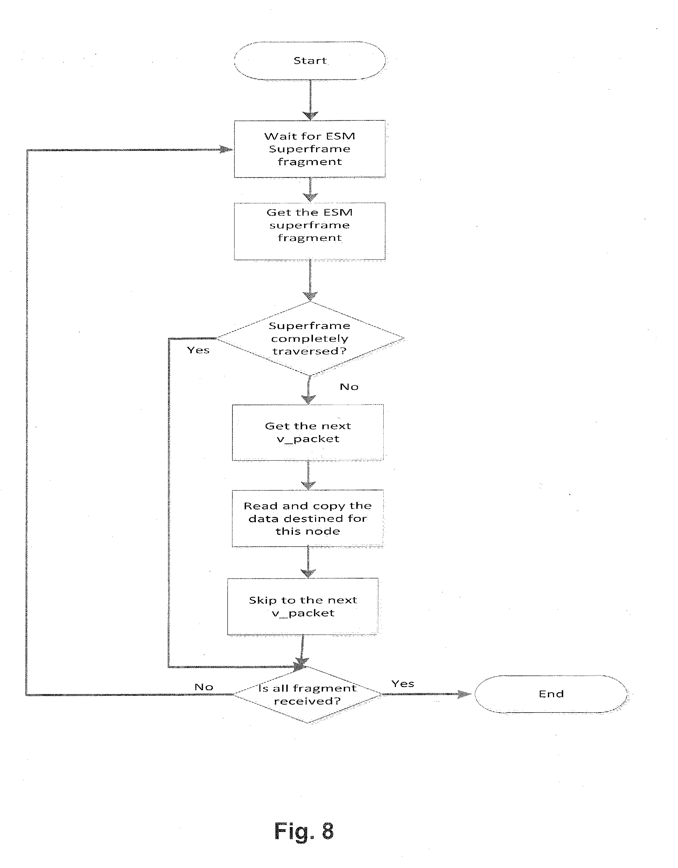

To arrange the information to be sent to multiple stations, the invention provides a mechanism that uses the payload field inside the MAC frame. This mechanism is illustrated in the flow diagrams for controller and for the station in figure 7 and 8, respectively.

Thereby, it has to be noted that the present invention is generally directed to transmitting data to a multitude of n stations (n≥2). The term "second" has thus to be interpreted in the invention as a "different" or "further" station in comparison with the first station. Thus, it is clear that in case of n stations a packet according to the invention may comprise n control bits fields and n data sets - one data set for each of the n stations. Consequently, a packet may additionally comprise n indications of lengths of data bits and/or n End-of-Data (EOD) flags in case of n stations. Likewise, n virtual queues and n IDs may be provided.

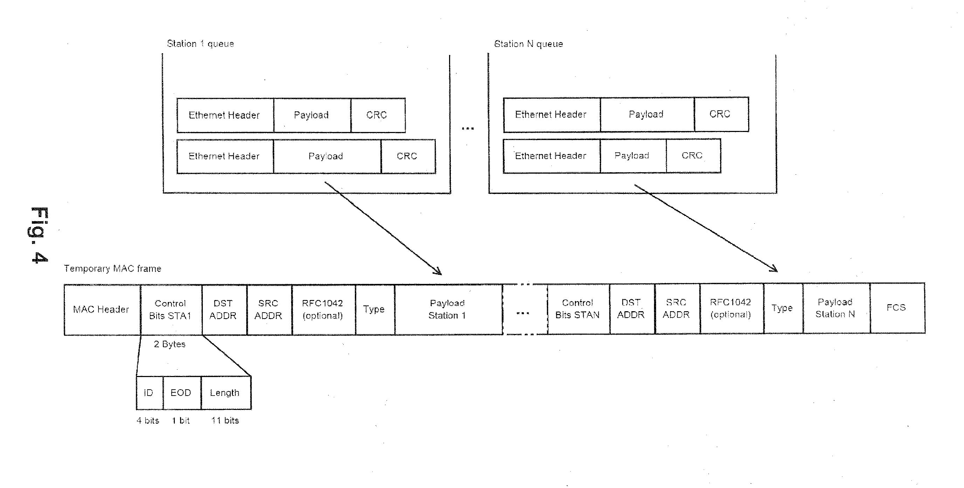

Considering n stations, the controller has one virtual queue assigned to each station. When the queues have data to transmit, the controller first creates a temporary MAC frame. This temporary MAC frame, as the name indicates, is a temporary MAC frame to ensure backward compatibility. This frame is basically a broadcast MAC frame where the content of different frames for the two stations is concatenated. The creation of such frame is illustrated in figure 4 for this example.

In order to allow these n stations to identify their content, a control bits field is added at the beginning of each data, also represented in figure 4. The control bits field comprises the ID, which identifies the station. Moreover, an End Of Data flag (EOD), which indicates if this is the last part of data, and the length of data to read may be contained in the control bits field. The flag EOD will only be used on another MAC frame that will be described next, since the notion of EOD is not applicable on this temporary MAC frame.

To allow a multi-user behavior in a single frame but keeping backward compatibility, for example with the current IEEE802.1 MAC standards, and also to apply the "bit-arrangement" mentioned according to an embodiment of the invention, the payload of the temporary frame is worked, by intercalating, in a round-robin fashion, a specific number of bits, decided by the priority policy.

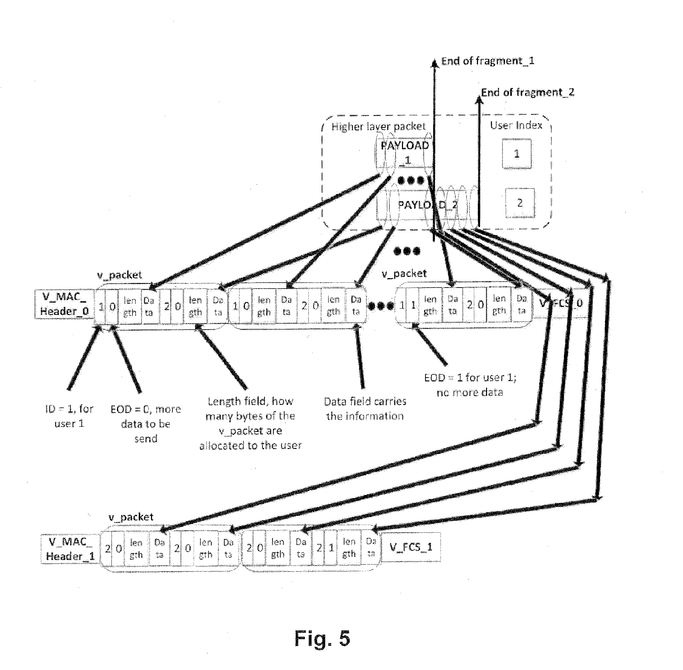

This mechanism, illustrated in figure 5, may be applied instead using for example the fragmentation mechanism of IEEE802.11 standard. For a simplified explanation of the invention, an embodiment of a first station s1 and a second station s2 being served by one controller is discussed with respect to figure 5.

After applying this mechanism, the temporary frame is now called Superframe. A Superframe is combination of many so called "v_packets". Each v_packets length may be N*M bits long, as will be discussed further below, and its format is shown in Fig. 5. The Superframe, is a broadcast MAC frame equal to the temporary frame, backward compatible, but with the payload following the bit-arrangement technique according to the invention. To be possible to distinct a normal frame from a Superframe at station side, a flag may be put inside the type field at MAC header. If this flag is set, the frame is a Superframe. If not, it is for example an IEEE802.11 MAC frame.

Each piece of data in figure 5 has, at the beginning, the same format of control bits mentioned above. The EOD flag in this embodiment is used to indicate to the station that the next piece of data is the last one, i.e. EOD =1, or otherwise EOD = 0, and the length field is updated with the length of this piece of data.

If the length of all the overall payload (i.e. sum of all v_packets) is higher than the maximum length of a MAC frame, fragmentation may be used by creating a new Superframe and repeating the same mechanism. All Superframes fragments are sent as broadcast frame.

Moreover, figure 5 depicts as a further embodiment a second Superframe containing only data for station s2 since all data bits for station s1 could be transmitted in the first Superframe. The packet of the second Superframe comprises similar to the first Superframe control bits field and data bits, however, only for the second station.

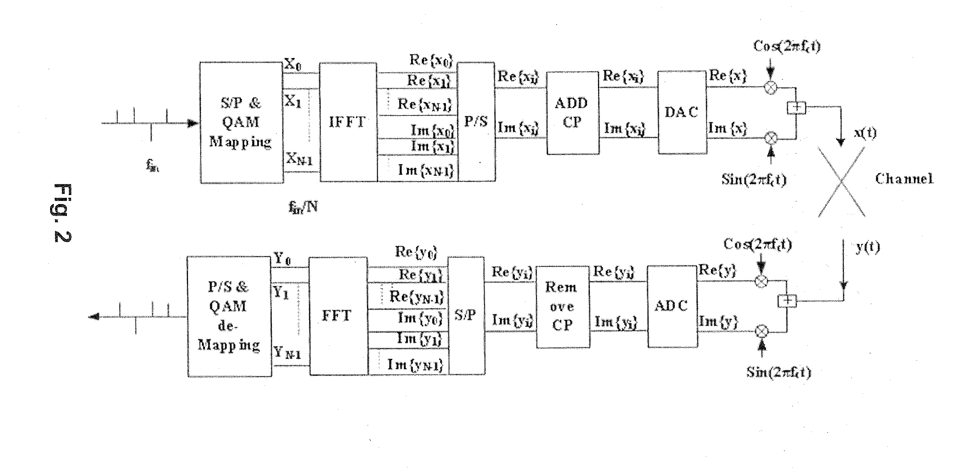

In the following, an example scenario of IEEE802.11g standard based WiFi network for the above-discussed example embodiment of two stations, i.e. station1 s1 and station2 s2 being simultaneously served by a controller, is considered. An illustration of block diagram for OFDM based transmitter and receiver is provided in figure 2. The "bit-arrangement" technique arranges data bits from s1 and s2 in a sequential order that when such arrangement is entered to Serial-to-Parallel (S/P) and QAM Mapping blocks (see figure. 2) and then to N-data inputs of a IFFT (X0, ..., XN-1) module, at each OFDM symbol transmission, data bits of s1 and s2 are transmitted simultaneously over the wireless medium.

According to the IEEE802.11 g standard, the number of inputs to IFFT is N = 48 and it is supposed that with respect to the applied priority policy, the controller decided to allocate 12 inputs to s1 and 36 inputs to s2. Further, the "bit-arrangement" technique considers the modulation level, i.e. M bits per sample, supported by the current transmission period. Having modulation level M means each of the N IFFT inputs carrier comprises M bits, i.e. in total the IFFT has N*M bits capacity per OFDM symbol.

Therefore, the "bit-arrangement" technique according to invention creates consecutive bit sequences of N*M bits length. Each of these consecutive bit sequences will exactly fit to a transmitted OFDM symbol. This prevents any misalignment for stations' bits. And within the N*M bits length sequence, the "bit-arrangement" technique will take the first 12*M bits for the s1 station and the rest 36*M bits for the s2 station. Thus, assume modulation level M = 4, with every OFDM symbol transmission in total 48*4=192 bits will be transmitted and first 12*4=48 of these bits will be for the station s1 and the rest 36*4=144 bits will be for the station s2. At IEEE802.11g standard the OFDM symbol duration is 4 microseconds, i.e. an OFDM symbol is transmitted at every 4 microseconds till the end of the transmission period.

A control bits field may for example comprise 16 bits as indicated in figure 4. Thus, the 48 and 144 bits comprise both control and data bits for station s1 and station s2, respectively. For station s1, the 48 bits contains 16 bits for control and 32 bits for data. For station s2, the 144 bits contain 16 bits for control and 128 bits for data.

These bits are entered to Serial-to-Parallel (S/P) and QAM Mapping blocks (see Fig. 2) and then to N-data inputs of IFFT (X0, ..., XN-1), at each OFDM symbol transmission.

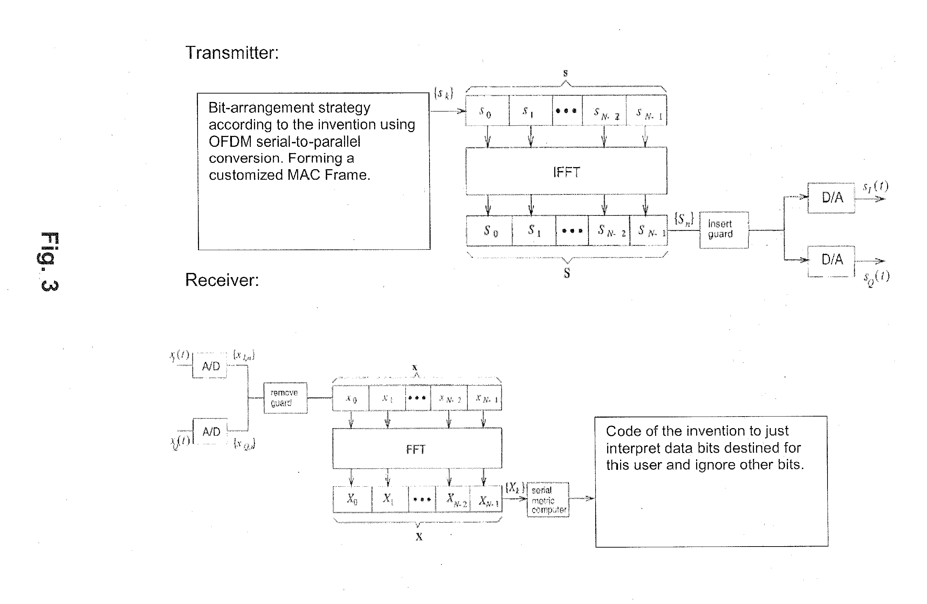

A high level implementation of "bit arrangement" technique's position at controller and station is provided by Fig. 3.

The controller according to a further embodiment also provides another mechanism to deliver data that arrive from the stations, to the correct virtual interface created for each station. As mentioned above, when a new station arrives, the controller creates a virtual interface and a queue that is assigned to this station. All data for a specific station (downlink) is passed in this virtual interface, but also the uplink data from a specific station, is delivered to it. Each virtual interface has the MAC address of the station assigned. After receiving a frame from one station, an embodiment of the invention checks the source address inside the MAC header, seeks the virtual interface assigned to this station and sends the frame by the interface found.

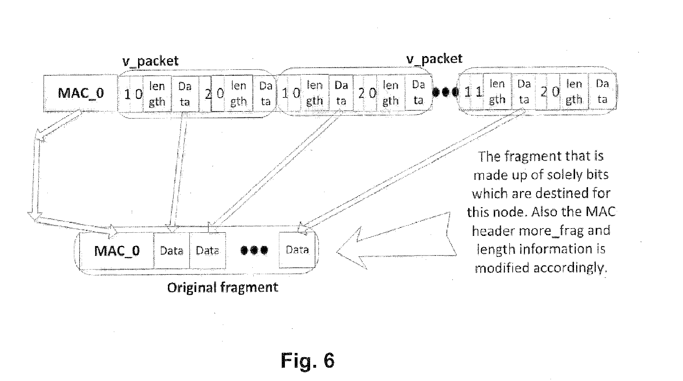

When a frame arrives to the stations, a further embodiment of the invention checks if it is a Superframe, by identifying the corresponding flag inside the type field at the MAC header, as explained above. A Superframe is combination of many so called "v_packets". Each v_packets length may be N*M bits long and its format is shown for example in Fig. 5 as discussed above or in Fig. 6. If it is a normal frame, the following embodiment is not applied.

In other words, the stations receive the Superframes by doing overhearing, as for example defined in IEEE802.11 standards. Then, the stations check the type of frame and discard it, if the station cannot read the Superframe. This is the normal behaviour, for example in IEEE802.11, for unknown frames or to frames that don't have the station as destination. Thereby, backward compatibility to older standards may achieved.

If the received frame is a Superframe, the following embodiments may be used to create the original frame at the stations' side:
According to one embodiment all stations may overhear the packets of a Superframe. If a default length of data bits or individual lengths of data bits for each station - for example according to their priority - are used, a station counts the data bits in a packet in order to identify the next control bits field for possibly determining its own identification (ID).

To create the original frame, the station will read the control bits field and seeks is own ID, as illustrated in figure 6. Concerning data that belong to others stations, the station will not read said data and will discard it later. Thereby, it has to be mentioned that the term "read" has be interpreted as a further processing of the data.

This is an advantageous possibility to indicate to the stations how many data bits of have to be counted until the next control bits field is present in the payload section of the received MAC frame. As to the example above, the second station has to count the data bits for the first station according to the data length parameter in the first control bits field in order to identify the second control bits field indicating the relevant data for the second station. In contrast, if lengths of data bits are not provided at all, a default length of data bits in a packet may be determined in advance for all stations.

When the station finds the control bits field with its own ID, it will check if this is the last piece of data or not, and the length of data to read. If this is not the last piece of data, it continues reading its control bits fields and data until finding the EOD flag set or by reaching the end of the payload.

All the pieces of data that belong to the station are joined in a new MAC frame. The station will read the destination and source MAC address available at the beginning of the data, as described above, and fill the MAC header of newly created MAC frame. These MAC addresses are then removed from the payload at the later stage of reception stack.

If the flag EOD was found set, during the reading of the control bits, the station can read the last part of data addressed to it and create the original/complete frame for this station. Then, further frame processing may follow the IEEE802.11 standard. At this point, the embodiment is transparent for the IEEE802.11 protocol.

If a station reaches the end of a payload without the flag EOD set, the station must wait for the next fragment of the Superframe, see for example the second fragment prepared for station s2 at Fig. 5. In this case, a further embodiment may use the defragmentation mechanism that exists in the IEEE802.11 protocol, to create the original frame.

To achieve this, instead creating the complete/original frame, it may be possible to create an fragment of the original frame. This may be achieved by setting the flag "More frags" at 1 and also by setting index of the fragment, in the sequence control field at MAC header. When the station receives a Superframe fragment that has the last piece of data for this station, the same process done on the others fragments is done as well, but with the difference of setting the flag "More frags" as 0, since this is the last fragment.

With this embodiment, the IEEE802.11 can queue this fragment and wait for all the fragments arrives. When the last fragment arrives, IEEE802.11 can join all the payloads, which means creating the original frame for this frame.

According to a further embodiment the transmission of data from station remains unchanged.

A further embodiment is directed to short-range networks where transmission is based on a shared medium (e.g. broadcast) and which rely on OFDM for data transmission. The invention provides thus a mechanism applicable downlink (from antenna to station) to assist in coding, in a single symbol, data to be transmitted to multiple stations. Such mechanism results in a more efficient splitting of transmission time thus allowing to serve more stations in a specific time-frame.

The invention is applicable in the context of narrow band wireless technologies which consider OFDM, and it operates downlink (from antenna to device) without requiring any hardware changes, and being backward compatible with current standards.

The following advantages may be achieved by the embodiments of the invention:
- Reduction of RTT delay and latency
- Decrease contention based channel access overhead (RTS, CTS)
- Backward compatible with current 802.11 standards
- Reduced Capital Expenditures
- Latency reduction. By allowing data to be transmitted to multiple stations in the same timeframe, the invention provides a way to circumvent the original design of the MAC Layer which requires contention (1 station at a time) to be served.
- Better Quality of Service. The reduction in latency and the possibility to prioritize requests according to the subscriber priority introduces a way to prevent problems such as the "hidden station" problem. For instance, today if one slow station grabs the medium first to transmit e.g. 100 Kbytes of information, the other stations have to wait until they can transmit, no matter how priority the communication may be. According to the invention, stations are first identified based on a specific set of priorities, and then multiple stations are served based according to their priority.
- Backward compatibility with current systems. The invention has been designed to ensure that the new system could be fully compatible with existing systems, thus ensuring that by introducing improvements, the operation of the network is feasible and does not increase in terms of complexity.

It is further envisioned that the embodiments of the invention can assist in providing current short-range wireless environments (such as Wi-Fi) better quality as it lowers latency. This is an advantage for real-time services (such as real-time streaming) and as such it is considered that Wireless Internet Service Providers as well as Access Operators. Embodiments of the invention can be seen as a differentiating improvement in the context of dense wireless deployments, as is the case of residential households today in any urban environment.

To summarize, allowing downlink (from antenna to the station) transmission via one symbol to multiple stations provides the means to improve the performance of current solutions in three aspects. Firstly, by allowing data to be transmitted on the same time frame to multiple stations, the control overhead is reduced in comparison to the current standard, as the same control information is used to transmit data to multiple stations. Secondly, for real-time traffic there is an upper bound on usable data rate. For instance, for voice traffic it is approximately 320 kbps and for video traffic it is 1Mbps (depending on the encoding format and rate of the stream sampling). Hence, increasing the capacity of the wireless link will not be useful in current wireless/OFDM approaches, as buffering cannot be used in real-time traffic. The data rate which exceeds required limit will not be utilized and wasted. With the increasing popularity of voice-over IP (VoIP), online-gaming, video-chat (e.g. Skype) this inefficiency becomes an important problem to be solved. By multiplexing downlink data to several stations the invention is expected to provide a better usage of high data rate channels, therefore a beneficial aspect in terms of real-time traffic. Thirdly, instead of communicating to users one by one, thus wasting time in particular if the first station that captures the medium is what is known as "slow" station (e.g. away from the antenna or attaining severe interference around), the invention provides a way to transmit "simultaneously" data to several stations within the same time frame thus decreasing the round-trip time and the latency of the transmission.

Thus, the invention provides a method and apparatus for allowing a controller (antenna) to transmit simultaneously data to multiple stations within the same time-frame, in short-range wireless networks within the same data transmission period. Further, the invention provides a method to allow the transmission of data to multiple stations within the same time frame, without scrambling the symbols, and without incurring further control overhead. Further, the invention provides a method to uniquely map data from different stations to specific sub-carriers during transmission. Further, the invention provides a mechanism that takes into consideration the priority of a specific station transmission and works on the controller (antenna) to provide a proportional chunk of the transmission channel.

In summary, the invention provides an underlying system for simultaneous transmissions without any hardware change. The invention may work on a single channel which complies with currently used devices. Thereby, the transmitted signal is a combination of bits from multiple users that are in digital format. The bit arrangement technique according to the invention depends on the scheduling policy of users. Each packet or (OFDM) symbol carries bits from multiple users and hence data frames from multiple users are communicated in parallel. The invention may arrange bits from multiple frames to be transmitted simultaneously by OFDM symbols. The frame aggregation of the invention is controlled by the availability of more than one non-empty transmitter queue. The invention may use a sequence is based on the scheduling mechanism used to choose users for simultaneous transmission and first in first out (FIFO) policy may be used for each user transmission queue. In the invention, the original MAC address (Source and Destination) may be added after the MAC header, but may also include the type of frame and also the RFC 1042 field, if necessary. These are the information necessary to the node build the original frame with all the correct information. In the invention, concerning the MAC address fields available inside the MAC header, only two are used to be possible to send the frame as a broadcast frame. The rest of the address fields available are not used by our solution and with this, the invention can keep the compatibility with the 802.11 networks. In general, the invention addresses transmission to multiple subscriber units at one instant in time. Thereby, encapsulation as a way to transmit downstream information directed to multiple subscribers, downstream only is provided by the invention.

## Claims

1. Method for transmitting data from a controller to multiple stations in a wireless network, wherein said data comprises a first data set to be sent to a first station and a second data set to be sent to a second station, whereby the method comprises the following steps:
generating a MAC frame comprising a MAC header and a payload, said payload comprising one or more packets, each packet being generated such that it comprises:
a first control bits field including an identification (ID) of the first station, and data bits from the first data set;
a second control bits field including an identification (ID) of the second station, and data bits from the second data set;
transmitting said generated MAC frame by said controller.

2. The method of claim 1, wherein
said first control bits field includes an indication of a first length of data bits from the first data set; and
said second control bits field includes an indication of a second length of data bits from the second data set.

3. The method of one of the preceding claims, wherein multiple packets are generated when generating said MAC frame, wherein said first data set and said second data set are used to fill the first and second data lengths of each packet in an intercalating fashion when generating said MAC frame.

4. The method of one of the preceding claims, wherein the first and second lengths are assigned in accordance of the priority of said first and said second station.

5. The method of one of the preceding claims, wherein the first control bits field further comprises a first End-of-Data (EOD) flag, which indicates to the first station whether data from the first data set is still to be received, and a second End-of-Data (EOD) flag, which indicates to the second station whether data from the second data set is still to be received.

6. The method of one of the preceding claims, wherein each of said packets corresponds to a symbol to be transmitted, preferably in an OFDM transmission.

7. The method of one of the preceding claims, further comprising before the step of generating a MAC frame:
arranging the data set of a respective station in a virtual queue according to a MAC layer virtualization protocol,
associating the ID of the respective station to said virtual queue, and
generating a temporary MAC frame comprising a MAC header, the respective control bits fields and the respective data sets from the respective virtual queues, whereby the MAC frame is generated from the temporary MAC frame.

8. The method of claims 6 or 7, further comprising using an OFDM transmitter in the step of generating a MAC frame, wherein a packet corresponding to an symbol is generated by a Serial-to-Parallel module, a QAM mapping module and an inverse fast fourier transform (IFFT) module having N inputs and a modulation level of M bits per sample such that the symbol comprises N*M bits.

9. Method for receiving data from a controller at multiple stations in a wireless network, wherein said data comprises a first data set to be sent to a first station and a second data set to be sent to a second station, whereby the method comprises the following steps:
receiving a MAC frame comprising a MAC header and a payload at the first station and at the second station, said payload comprising one or more packets,
each packet being generated such that it comprises:
a first control bits field including an identification (ID) of the first station, and data bits from the first data set;
a second control bits field including an identification (ID) of the second station, and data bits from the second data set;
reading of the control bits fields by the first station and the second station;
if the first station identifies its own ID in the first control bits field, reading of the data bits from the first data set by the first station; and
if the second station identifies its own ID in the second control bits field, reading of the data bits from the second data set by the second station.

10. The method of claim 9, further comprising receiving a MAC frame generated by a method according to any one of claims 1 to 8.

11. The method of claim 10, wherein said station continues reading further control bits fields and the respective data bits until the respective EOD flag in its control bits fields indicates the end of data to be read for said station.

12. The method of claims 9 to 11, further comprising joining the read data bits to a MAC frame by said station.

13. The method of one of the preceding claims, wherein if n stations (n≥2) are to be served in the wireless network, said data comprises n data sets to be respectively sent to said n stations and a packet comprises n control bits field and respective data bits for the n stations from said n data sets.

14. A controller comprising modules for carrying out a method according to one of claims 1 to 8 and 13.

15. A station comprising modules for carrying out a method according to one of claims 9 to 13.
